# DEMANDE DE BREVET EUROPEEN

(11) **EP 1 243 451 A1**
(43) Date de publication de la demande: **25.09.2002**
(21) Numéro de dépôt: 01400756.1
(22) Date de dépôt: 23.03.2001
(51) Int. Cl.: B60J 5/04

(54) **Dispositif de protection latérale pour véhicule automobile**

(71) Demandeur: Renault s.a.s., 92100 Boulogne Billancourt (FR)
(72) Inventeur: Alcon, Philippe, 78950 Gambais (FR); Mendes, José, 75018 Paris (FR); Jacob, Benoit, 78000 La Celle Saint Cloud (FR); Payen, Gérard, 78320 La Verriere (FR)

(57) **Abrégé**

Dispositif de protection latérale pour véhicule automobile comportant au moins une barre de fermeture (40) d'un accès (3) à l'espace intérieur dudit véhicule, ladite barre (40) étant montée sur au moins une charnière (41) par une de ses extrémités et comportant, à l'autre extrémité, un élément de verrouillage (42), sur une partie fixe du véhicule, caractérisé en ce que la barre de fermeture (40) porte une surface (50) amovible d'obturation totale ou partielle dudit accès (3) à l'espace intérieur du véhicule automobile.

## Description

L'invention concerne un dispositif de protection latérale pour véhicule automobile et plus particulièrement un dispositif tel qu'une porte pouvant être adaptée au choix de protection de l'utilisateur.

Afin de protéger le ou les passagers d'un véhicule automobile, des portes sont disposées de part et d'autre des côtés d'un véhicule. Ces portes sont destinées à protéger les utilisateurs des intempéries et des projections diverses ainsi que de limiter l'intrusion dans l'habitacle d'éléments risquant de blesser lesdits utilisateurs, au cours d'une collision avec un autre véhicule ou contre un obstacle fixe.

Sur certains types de véhicule automobile, destiné à rouler en terrain accidenté et sur route, il est utilisé des portes légères, généralement transparentes, telles que représentées dans la publication US-A-4644699, qui peuvent être facilement enlevée. Il est également connu des portes en plastique souple transparent. Ces types de portes protègent l'utilisateur des projections légères, telle que par exemple de l'eau ou des gravillons, et ne saurait aucunement protéger l'utilisateur d'une collision même à faible vitesse. De plus une porte réalisée en un matériau souple ne permet pas de contrôler le bruit et l'aérodynamisme du véhicule.

Des constructeurs de véhicule automobile choisissent, pour ce type de véhicule, de ne pas utiliser de protection contre les intempéries et d'utiliser soit une porte basse ou juste une barre anti-intrusion, répondant ainsi à un souhait principal de sécurité en cas de collision ou de retournement du véhicule.

Afin de pallier ces inconvénients, l'invention a pour objet un dispositif de protection permettant de favoriser la sécurité latérale des utilisateurs tout en pouvant choisir d'utiliser ou non une fonction complémentaire de protection des intempéries pour améliorer l'aérodynamisme du véhicule et l'isolation phonique.

L'invention a également pour objet, un dispositif de protection latérale permettant d'assurer un montage et démontage aisé et rapide de la partie de protection des intempéries.

Selon une caractéristique de l'invention, la barre de fermeture porte une surface amovible d'obturation totale ou partielle dudit accès à l'espace intérieur du véhicule automobile.

Selon une autre caractéristique de l'invention, la surface d'obturation est montée sur la barre de fermeture par l'intermédiaire d'une liaison coulissante.

Selon une autre caractéristique de l'invention, la liaison coulissante est formée par au moins une fente réalisée dans la barre de fermeture dans laquelle est glissée la surface d'obturation.

Selon une autre caractéristique de l'invention, la liaison coulissante est formée par des éléments de liaison, portés par la surface d'obturation, qui coopèrent avec la barre de fermeture qui forme un élément de réception desdits éléments de liaison.

Selon une autre caractéristique de l'invention, la surface d'obturation est montée radialement sur la barre de fermeture.

Selon une autre caractéristique de l'invention, la surface d'obturation est pincée entre la barre de fermeture et une partie complémentaire.

Selon une autre caractéristique de l'invention, la barre de fermeture a la forme d'un U.

Selon une autre caractéristique de l'invention, la surface d'obturation est formée d'une plaque en matériau plastique.

Selon une autre caractéristique de l'invention, la délimitation de l'ouverture d'accès forme une butée de coulissement, de la surface d'obturation sur la barre de fermeture, lorsque ladite barre de fermeture est en position fermée.

D'autres caractéristiques et avantages de l'invention apparaîtront à la lecture de la description d'exemples de réalisation d'un dispositif de protection latérale pour véhicule automobile au dessin annexé dans lequel :
- La figure 1 représente un véhicule automobile équipé d'un dispositif selon l'invention.
- La figure 2 représente une vue en élévation d'une partie centrale d'un véhicule comportant une barre de fermeture en forme de U.
- La figure 3 représente une section partielle suivant A de la figure 2.

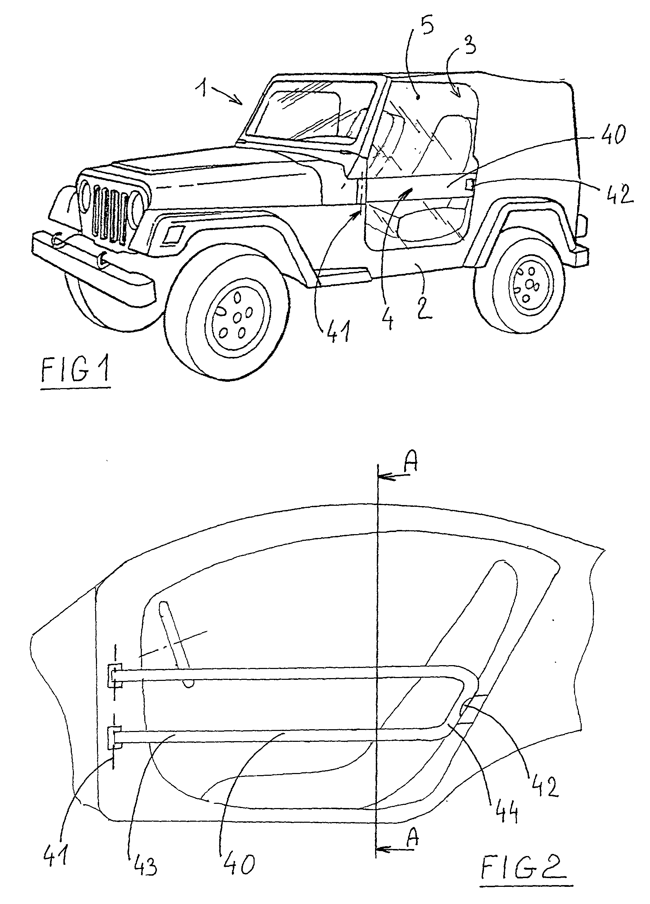

Tel que représenté à la figure 1, le véhicule 1 est constitué d'un habitacle délimité au moins par des parties latérales 2. Ces parties latérales 2 sont pourvues d'ouverture 3 permettant l'accès à l'intérieur du véhicule automobile. Les ouvertures d'accès 3 comportent un élément de fermeture 4, constituée d'au moins une barre 40 montée à pivotement autour d'une charnière 41, par une de ses extrémités et comporte, sur l'autre extrémité, un moyen de verrouillage 42, connu en soit, dudit élément de fermeture sur la structure du véhicule automobile. Le moyen de verrouillage 42 peut être constitué, par exemple, d'une serrure, porté par l'élément de fermeture 4, qui coopère avec une gâche portée par la structure du véhicule.

La barre de fermeture 40 est réalisée préférentiellement en alliage léger tel que de l'aluminium.

Tel que représenté à la figure 2, la barre 40 forme un U, par exemple, dont les extrémités libres 43 sont liées à des charnières 41 et la partie de liaison 44 des branches du U porte le moyen de verrouillage 42. La barre 40 peut également être d'une seule pièce formant un parallélépipède, plus ou moins large. Ces solutions permettent de couvrir une zone suffisamment large pour assurer une fonction d'anti-intrusion en cas de collision avec un autre véhicule ou un obstacle fixe, ou en cas de retournement.

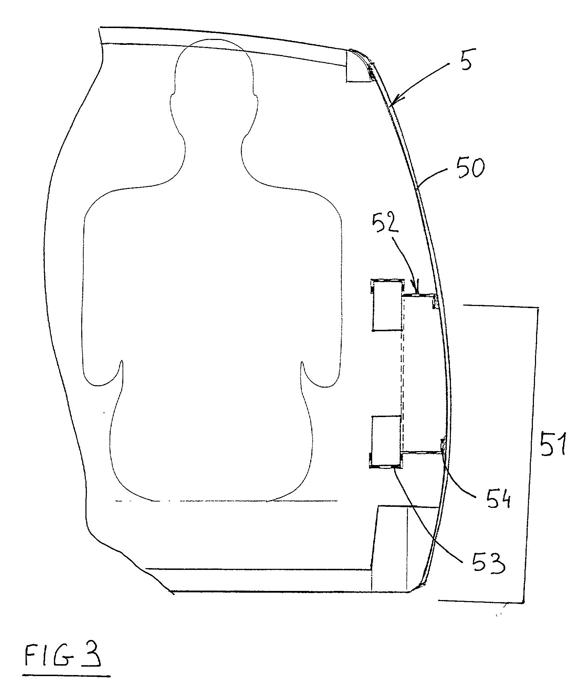

Tel que représenté aux figures 1 et 3, un élément de protection des intempéries 5 est constitué d'une surface 50 obturant l'ensemble de l'ouverture 3 d'accès à l'intérieur du véhicule automobile. Cette surface 50 est réalisée, par exemple, en une plaque de polycarbonate. Dans le cas de l'utilisation d'une barre 40, simple ou sous la forme d'un U, il est possible d'opacifier ou de rendre translucide une partie inférieure 51 de la surface d'obturation 50, afin de cacher la partie inférieure des utilisateurs. Cette opacification pouvant être réalisée, par exemple, par grainage de la surface.

Afin de rendre facilement amovible la surface d'obturation 50 tout en permettant une bonne solidarisation de celle-ci avec la barre de fermeture 40, des éléments de liaison 52 sont disposés sur ladite surface d'obturation 50.

Les éléments de liaison 52 coopèrent avec la barre de fermeture 40 par coulissement vertical ou longitudinal, par exemple. Un tel assemblage permet d'éviter tout démontage lorsque l'ensemble barre de fermeture 40 et surface d'obturation 50 est en position fermée et par conséquent d'empêcher la perte de ladite surface d'obturation 50 en roulant. En effet les éléments de liaison 52 permettant un coulissement sur ou dans la barre de fermeture 40, la surface d'obturation 50 ne peut être enlevée ou montée que lorsque ladite barre de fermeture 40 est en position ouverte. A titre d'exemple, les éléments de liaison 52 peuvent prendre la forme de cavaliers 53 dont les extrémités 54 peuvent être liées à la surface d'obturation 50 par collage ou par tout autre moyen de fixation. Les cavaliers 53 sont alors montés sur la barre de fermeture 40. Une vis ou tout autre moyen de fixation peut être utilisé en complément afin d'améliorer l'immobilisation de la surface d'obturation 50 sur la barre de retenue 40.

Selon un mode de réalisation non représenté, la surface d'obturation 50 peut également être liée à la barre de fermeture 40 par l'intermédiaire d'une fente réalisée sur la barre de fermeture 40 et par des éléments d'immobilisation tels que des vis à démontage rapide. La surface d'obturation 50 est alors pourvue de perçage ou de forme permettant de laisser le passage des vis de fixation ou de coopérer avec des formes d'immobilisation.

Il est également possible de prévoir un montage radial de la surface d'obturation 50 sur la barre de fermeture 40. L'immobilisation étant alors réalisée directement par des vis ou par une partie, disposée à l'extérieur du véhicule, complémentaire de la barre 40 qui exerce un effort de pincement sur la surface d'obturation 50. La partie complémentaire peut être localisée à l'intérieur du véhicule et la barre de fermeture 40 à l'extérieur.

Il est également possible, sans changer l'esprit de l'invention, que la surface d'obturation 50 ferme l'ouverture d'accès que partiellement, par exemple la partie inférieure.

## Revendications

1. Dispositif de protection latérale pour véhicule automobile comportant au moins une barre de fermeture (40) d'un accès (3) à l'espace intérieur dudit véhicule, ladite barre (40) étant montée sur au moins une charnière (41) par une de ses extrémités et comportant, à l'autre extrémité, un élément de verrouillage (42), sur une partie fixe du véhicule, **caractérisé en ce que** la barre de fermeture (40) porte une surface (50) amovible d'obturation totale ou partielle dudit accès (3) à l'espace intérieur du véhicule automobile.

2. Dispositif de protection latérale selon la revendication 1, **caractérisé en ce que** la surface d'obturation (50) est montée sur la barre de fermeture (40) par l'intermédiaire d'une liaison coulissante.

3. Dispositif de protection latérale selon la revendication 2, **caractérisé en ce que** la liaison coulissante est formée par au moins une fente réalisée dans la barre de fermeture (40) dans laquelle est glissée la surface d'obturation (50).

4. Dispositif de protection latérale selon la revendication 2, **caractérisé en ce que** la liaison coulissante est formée par des éléments de liaison (52), portés par la surface d'obturation (50), qui coopèrent avec la barre de fermeture (40) qui forme un élément de réception desdits éléments de liaison (52).

5. Dispositif de protection latérale selon l'une quelconque des revendications 1 à 2, **caractérisé en ce que** la surface d'obturation (50) est montée radialement sur la barre de fermeture (40).

6. Dispositif de protection latérale selon l'une quelconque des revendications 1, 2 ou 5, **caractérisé en ce que** la surface d'obturation (50) est pincée entre la barre de fermeture (40) et une partie complémentaire.

7. Dispositif de protection latérale selon l'une quelconque des revendications précédentes, **caractérisé en ce que** la barre de fermeture (40) a la forme d'un U.

8. Dispositif de protection latérale selon l'une quelconque des revendications précédentes, **caractérisé en ce que** la surface d'obturation (50) est formée d'une plaque en matériau plastique.

9. Dispositif de protection latérale selon l'une quelconque des revendications 1 à 4, **caractérisé en ce que** la délimitation de l'ouverture d'accès (3) forme une butée de coulissement, de la surface d'obturation (50) sur la barre de fermeture (40), lorsque ladite barre de fermeture (40) est en position fermée.
